# EUROPÄISCHE PATENTSCHRIFT

(11) **EP 1 338 863 B1**
(45) Veröffentlichungstag und Bekanntmachung des Hinweises auf die Patenterteilung: **11.10.2006**
(21) Anmeldenummer: 02003852.7
(22) Anmeldetag: 20.02.2002
(51) Int. Cl.: G01B 21/04, G01B 1/00, G01B 3/30

(54) **Thermisch kompensierter Prüfkörper für Koordinatenmessmaschinen**
Thermally compensated test body for coordinate measuring machines
Eprouvette thermiquement compensée pour des machines de mesure de coordonnées

(43) Veröffentlichungstag der Anmeldung: 27.08.2003
(73) Patentinhaber: metronom AG, 55120 Mainz (DE)
(72) Erfinder: Blondeau,Jean,Dr., 74889 Sinsheim-Düren (DE)
(74) Vertreter: Grünecker, Kinkeldey, Stockmair & Schwanhäusser Anwaltssozietät

(56) Entgegenhaltungen:
- EP-A- 0 350 532
- DE-A- 10 023 604
- DE-A- 19 915 012
- US-B1- 6 243 527

## Beschreibung

### Gebiet der Erfindung

Die Erfindung betrifft einen Prüfkörper mit mindestens zwei Antastformelementen und mit mindestens einem Verbindungselement zur Verbindung der mindestens zwei Antastformelemente, wobei jedes Verbindungselement mindestens ein Befestigungselement zur Befestigung eines Antastformelements an einem Ende des Verbindungselement aufweist.

### Stand der Technik

Ein derartiger Prüfkörper ist aus DE 199 15 012 bekannt.

Prüfkörper dienen im Allgemeinen der Einstellung und der Überwachung von räumlich positionierenden bzw. messenden Systemen, insbesondere von mobilen Koordinatenmessystemen. Sie bestehen gewöhnlich aus Referenzelementen, sogenannten Antastformelementen, die durch Verbindungselemente miteinander verbunden sind und genau definierte Abstände voneinander aufweisen. Ein Koordinatenmessystem wird überprüft, indem mit ihm die relativen Positionen der Antastformelemente bestimmt werden. Die somit erhaltenen relativen Abstände werden mit den tätsächlichen Abständen des Prüfkörpers verglichen.

Prüfkörper sollten verschiedene Anforderungen erfüllen. Zum einen sollten sich die Eigenschaften eines Prüfkörpers bei Standardmessbedingungen, also bei Temperaturen zwischen -20 ° Celsius und +70 ° Celsius und einer Luftfeuchtigkeit zwischen 0 % und 100 %, nicht oder nur unwesentlich ändern. Dies bedeutet insbesondere, dass sich die relativen Positionen der Antastformelemente bei Änderungen der Temperatur oder der Luftfeuchtigkeit bei Standardmessbedingungen nicht wesentlich verändern sollten. Zum anderen sollte ein Prüfkörper mit wirtschaftlich vertretbaren Aufwand transportiert werden können, damit er sich zur Überwachung von mobilen Geräten eignet. Daher darf ein Prüfkörper kein hohes Eigengewicht aufweisen und sollte auch einfach montier- und demontierbar sein.

Der in DE 199 15 012 beschriebene Prüfkörper umfasst kugelförmige Antastformelemente und stabförmige Verbindungselemente. Durch die Antastformelemente und die Verbindungselemente wird insgesamt ein Tetraeder gebildet, an dessen Ecken die Antastformelemente angeordnet sind. Das Material und/oder die Bemessung der Antastformelemente und das Material und/oder die Bemessung der Verbindungselemente sind derart aufeinander abgestimmt, dass sich der Abstand zwischen jeweils zwei Antastpunkten bei Standardmessbedingungen im Wesentlichen nicht ändert. Dies wird dadurch erreicht, dass die Antastformelemente ein Material mit positivem oder negativem Langenausdehnungskoeffizienten und die Verbindungselemente ein Material mit negativem bzw. positivem Längenausdehnungskoeffizienten bei Standardmessbedingungen aufweisen, so dass sich die jeweiligen Längenkontraktionen oder -dilatationen kompensieren. Die Verbindungselemente bestehen beispielsweise aus Kohlenstofffaserverbundwerkstoffe oder Glaskeramik-Werkstoff.

Ein weiterer Prüfkörper ist aus EP 0 350 532 bekannt. Dort bestehen die Verbindungselemente aus einem Faserverbundwerkstoff, bei dem sich Schichten aus Umfangswicklungen und Kreuzwicklungen abwechseln, wobei die Kreuzwicklungen mit einer Faser gewickelt sind, die einen negativen Wärmeausdehnungskoeffizienten hat. Die Kugeln bestehen dagegen aus einem Werkstoff, der einen positiven Wärmeausdehnunskoeffizienten hat.

Ein erster Nachteil des genannten Standes der Technik besteht darin, dass das Material und/oder die Bemessungen des gesamten Verbindungselementes so gewählt werden müssen, dass Ausdehnungen oder Kontraktionen der Antastformelemente kompensiert werden. Somit ist man bei der Wahl des Materials und insbesondere der Abmessungen des Vebindungselementes stark eingeschränkt. Als weiterer Nachteil kommt hinzu, dass speziell Materialien mit negativem Wärmeausdehnungskoeffizienten im Allgemeinen teuer in der Herstellung sind, woraus sich ein hoher Preis für das Prüfungselement ergibt.

Aufgabe der Erfindung ist es daher, die genannten Nachteile zu überwinden und einen Prüfkörper bereitzustellen, der sich zur genauen Überprüfung insbesondere von mobilen Koordinatenmessgeräten eignet, bei dem aber das Material und/oder die Abmessungen der Verbindungselemente nicht mehr in erster Linie abhängig vom Material und/oder den Abmessungen der Antastformelemente gewählt werden muss.

### Beschreibung der Erfindung

Diese Aufgabe wird gelöst durch einen Prüfkörper gemäß Anspruch 1. Demgemäß umfasst der erfindungsgemäße Prüfkörper mindestens zwei kugelförmige Antastformelemente und mindestens ein stabformiges Verbindungselement zur Verbindung der mindestens zwei Antastformelemente, wobei jedes Verbindungselement mindestens ein Befestigungselement zur Befestigung eines Antastformelementes an einem Ende des Verbindungselements aufweist, dadurch gekennzeichnet, dass Längenveränderungen der mindestens zwei Antastformelemente und des mindestens einen Verbindungselementes durch jedes Befestigungselement derart kompensiert werden, dass der Abstand zwischen jeweils zwei Antastpunkten bei Standardmessbedingungen konstant ist.

Die Mittelpunkte oder Schwerpunkte der Antastformelemente liegen auf den Verlängerungen der Achsen der stabförmigen Verbindungselemente. Die Mittelpunkte der Kugeln bilden die Antastpunkte. Auf diese Weise kann die relative Position der Antastformelemente bzw. der Antastpunkte mit hoher Genauigkeit festgelegt werden.

Durch die stabformige Ausbildung der Verbindungselemente ist in einfacher Weise eine Kontrolle der Längenveränderungen möglich. Außerdem kann in diesem Fall bereits ein vergleichsweise grobes Positionieren der Verbindungselemente zu relative genauen Positionen der Abtastformelemente zueinander führen.

Der Vorteil eines solchen Prüfkörpers besteht darin, dass Längenveränderungen der Antastformelemente und der Verbindungselemente durch die Befestigungselemente kompensiert werden. Dadurch wird eine hohe Genauigkeit bei der Überprüfung insbesondere von Koordinatenmessgeräten erreicht. Außerdem können Material und/oder Abmessungen der Abtastformelemente und der Verbindungselemente weitgehend frei gewählt werden. Falls für ein Befestigungselement ein teures Material mit einem negativen Wärmeausdehnungskoeffizienten gewählt wird, ist die erforderliche Materialmenge wesentlich geringer, als wenn ein ganzes Verbindungselement daraus gefertigt werden müsste. Somit ergibt sich durch den erfindungsgemäßen Prüfkörper ein wesentlich größere Flexibilität in der Wahl der Materialien und/oder Bemessungen; zusätzlich können die Herstellungskosten verringert werden.

Vorzugsweise umfasst jedes Befestigungselement eines erfindungsgemäßen Prüfkörpers ein Material mit einem positivem oder negativem thermischen Längeausdehnungskoeffizienten und ist die Form und/oder Bemessung jedes Befestigungselementes so gewählt, dass Längenänderungen jedes Antastformelementes und/oder jedes Verbindungselementes bei Standardmessbedingungen kompensiert werden.

Also kann beispielsweise bei Antastformelementen und Verbindungselementen mit positiven thermischen Längenausdehnungskoeffizienten auch jedes Befestigungselement ein Material mit einem positiven Längenausdehnungskoeffizienten umfassen. Die Form und/oder Bemessung des Befestigungselements kann dann so gewählt werden, dass bei einer positiven Temperaturänderung bei Standardmessbedingungen die Langendilatationen der Antastformelemente undNerbindungselemente kompensiert werden. In diesem Fall entfällt somit die Verwendung von teuren Materialien mit negativem Wärmeausdehnungskoeffizienten.

Gemäß einer vorteilhaften Weiterbildung der vorher beschriebenen Prüfkörper umfasst jedes Befestigungselement ein erstes Teilelement aus einem ersten Material und ein zweites Teilelement aus einem zweiten Material, wobei jedes Befestigungselement derart an dem Verbindungselement angeordnet ist und die Form und/oder Bemessung der beiden Teilelemente so gewählt ist, dass Längenänderungen jedes Antastformelements und/oder jedes Verbindungselements bei Standardmeßbedingungen kompensiert werden.

Auf diese vorteilhafte Weise ist es möglich durch ein Befestigungselement, das ein Material mit einem positiven Wärmeausdehnungskoeffizienten umfasst, Längenveränderungen von Antastformelementen und/oder Verbindungselementen mit positivem Wärmeausdehnungskoeffizienten zu kompensieren.

Gemäß einer vorteilhaften Weiterbildung wird das erste Teilelement als Hohlkörper, insbesondere in Form einer Hülse, ausgebildet. Damit kann ein einfacher Mechanismus zur Kompensation von Längenveränderungen der Verbindungselemente und Antastformelemente erhalten werden. Das Befestigungselement kann bspw. auf dem Verbindungselement oder auch innerhalb des Verbindungselements oder um das Verbindungselement herum angeordnet sein.

Vorzugsweise werden die Befestigungselemente so mit den Verbindungselementen verbunden, dass einerseits eine genaue und feste Positionierung erreicht werden kann, andererseits aber auch bei Längendilatationen oder -kontraktonen übemäßige Spannungen oder Sprengeffekte in den Materialien vermieden werden. Das Verbinden kann bspw. durch Verkleben oder Hartlöten erreicht werden.

Gemäß einer vorteilhaften Weiterbildung können die Abschnitte der Befestigungsgelemente, insbesondere die Endflächen, an denen die Antastformelemente angebracht werden, kegelförmig, vorzugsweise dem Radius der kugelförmigen Antastformelemente angepasst, ausgebildet werden. Dies führt dazu, dass die Positionierungsgenauigkeit der Antastformelemente bezüglich der Befestigungs- und -verbindungselemente weiter gesteigert werden kann.

Es ist von Vorteil, wenn die Antastformelemente und die Befestigungselemente miteinander lösbar verbindbar sind. Gemäß einer bevorzugten Weiterbildung wird die lösbare Verbindung durch Magnetkräfte realisiert. Hierdurch wird ein Mechanismus zur Verfügung gestellt, der ein besonders einfaches Montieren und Demontieren des Prüfkörpers erlaubt und damit einen vereinfachten Transport des Prüfkörpers an seinen Einsatzort ermöglicht.

Zur Ausbildung der magnetischen Verbindung können die Befestigungselemente Magnete umfassen. Diese können bspw. in dem Befestigungselement verklebt oder angelötet angeordnet sein. Bei dieser Weiterbildung können die Antastformelemente aus magnetischem Material bestehen oder ebenfalls Magnete aufweisen.

Gemäß einer vorteilhaften Weiterbildung aller vorher beschriebenen Prüfkörper ist mindestens ein Antastformelement mit mindestens zwei Verbindungselementen verbunden. Auf diese Weise können Prüfkörper mit verschiedenen Geometrien erhalten werden. Ein mögliches Beispiel ist ein Prüfkörper aus drei Antastformelementen, drei Befestigungselementen und zwei Verbindungselementen, wobei die Antastformelemente in einer Achse liegen und die äußeren Antastformelemente über jeweils ein Verbindungselement mit dem inneren Antastformelement verbunden sind.

Gemäß einer vorteilhaften Weiterbildung dieses Prüfkörpers bilden die Verbindungselemente die Kanten und die Antastformelemente die Ecken eines Tetraeders. Eine solche Prüfkörpergeometrie erlaubt ein einfaches Aufstellen. Außerdem sind wegen der Tetraederform alle Antastformelemente mit nur einem einzigen Taststift zugänglich.

Weitere Vorteile ergeben sich aus der folgenden Beschreibung spezieller Ausführungsbeispiele der Erfindung und der Bezugnahme auf die Zeichnungen. In den Zeichnungen zeigen:
Figur 1 eine (nicht maßstabsgetreue) Querschnittsansicht eines ersten Ausführungsbeispiels eines erfindungsgemäßen Befestigungselementes mit einem Verbindungs- und einem Antastformelement und
Figur 2 eine (nicht maßstabsgetreue) Querschnittsansicht eines zweiten Ausführungsbeispiels eines erfindungsgemäßen Befestigungselementes mit einem Verbindungs- und einem Antastformelement.

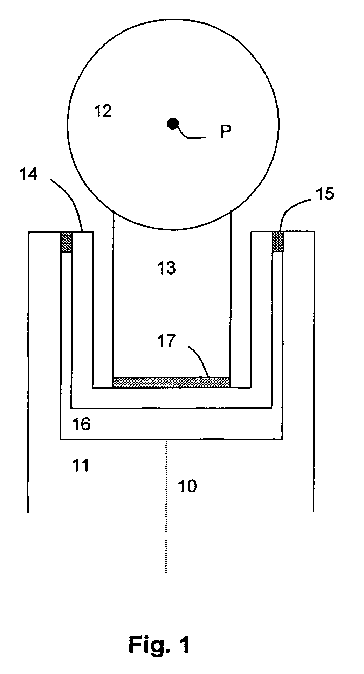

Figur 1 zeigt ein Befestigungselement, das in ein Verbindungselement 11 eingelassen ist. Dazu wurde das Ende des Verbindungselements 11 ausgehöhlt, so dass sich ein Hohlraum 16 bildet. Alternativ kann auch das gesamte Verbindungselement hohl sein. Das Befestigungselement umfasst einen Hohlkörper in Form einer Hülse 14, ein erstes Teilelement, der am oberen Rand an Stellen 15 mit der Innenseite des Befestigungselements 11 verklebt ist. Diese Verbindung kann sich entweder nur an einigen punktförmigen Stellen befinden oder bspw. um die gesamte Hülse in einem schmalen Bereich am oberen Rand herumlaufen. Je geringer die verklebte Fläche ist, desto weniger Spannungen treten bei Kontraktionen und Dilatationen auf. Innerhalb der Hülse 14 befindet sich ein zweites Teilelement 13, auf dem das kugelförmige Antastformelement 12 mit Antastpunkt P angeordnet ist. Das Teilelement 13 ist an seiner Grundfläche mit dem Boden der Hülse 14 verklebt. Dies kann über eine Schicht 17 erfolgen oder auch nur an einzelnen Punkten. Das Teilelement 13 kann auch an anderen Stellen zusätzlich oder stattdessen und mit anderen Verbindungsvorrichtungen mit der Hülse 14 verbunden werden. Vorzugsweise ist das Teilelement 13 ein Magnet, und das Antastformelement 12 besteht aus einem magnetischem Material. In diesem Fall ist das Antastformelement 12 in einfacher Weise lösbar mit dem Befestigungselement, das in diesem Ausführungsbeispiel die Teilelemente 13 und 14 umfasst, verbunden. In diesem Ausführungsbeispiel können nun sowohl das Verbindungselement 11, das Antastformelement 12, der Magnet 13 als auch das hülsenförmige Teilelement 14 einen positiven thermischen Längenkoeffizienten aufweisen. Bei einer positiven Temperaturänderung erfahren dann alle Materialien eine Längendilatation. Dabei dehnt sich allerdings das hülsenförmige Teilelement 14 entlang der Stabachse 10 in das Verbindungselement 11 hinein aus. Wird nun die Abmessung des hülsenförmigen Teilelements 14 geeignet gewählt, kann hiermit die Ausdehnung der übrigen Elemente kompensiert werden, so dass der Abstand zwischen zwei Antastpunkten im Wesentlichen konstant bleibt. Dieser Kompensierungsmechanismus funktioniert für verschiedene Kombinationen von Wärmeausdehnungskoeffizienten. So kann beispielsweise der Magnet 13 einen verschwindenden Ausdehnungskoeffizienten, das Antastformelement 12 einen positiven und das Verbindungselement 11 einen negativen Ausdehnungskoeffizienten aufweisen, wobei aber eine Ausdehnung des Antastformelementes 12 nur teilweise durch die entsprechende Kontraktion des Verbindungselements 11 kompensiert wird. In dem Ausführungsbeispiel ist es nicht nötig, dass das erste Teilelement, der Hohlkörper 14, am oberen Rand mit dem Verbindungselement 11 verbunden ist. Die Verbindung muss allerdings dergestalt sein, dass eine kompensierende Ausdehnung des Hohlkörpers 14 entlang der Stabachse möglich ist.

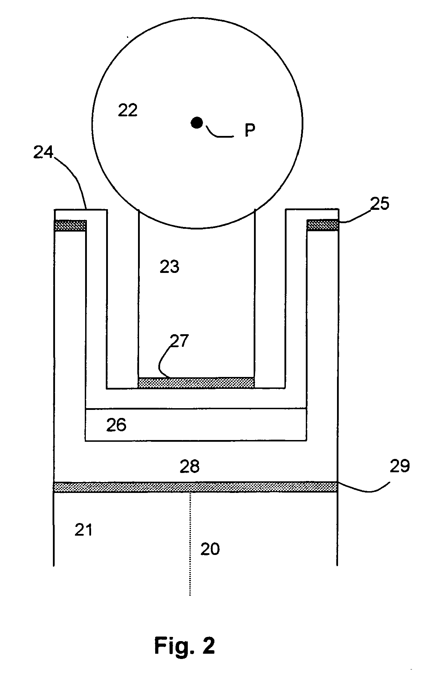

In einem alternativen Ausführungsbeispiel, siehe Figur 2, ist das Befestigungselement auf einem Ende des Verbindungselements 21 aufgebracht. In diesem Fall umfasst das Befestigungselement einen äußeren Hohlkörper 28, der mit dem Verbindungselement 21 an den Stellen 29 verklebt ist. Um Spannungen oder Sprengeffekte zu vermeiden, kann das Verkleben auch nicht mit einer Klebeschicht sondern nur mit einzelnen Klebepunkten erfolgen. Innerhalb des äußeren Hohlkörpers 28 befindet sich ein innerer Hohlkörper 24, wobei zwischen innerem und äußerem Hohlkörper ein Hohlraum 26 verbleibt. Zwischen den Seitenwändender beiden Hohlkörper kann, anders als in der Figur gezeigt, auch noch ein Zwischenraum sein, so daß sich die Hohlkörper auch in Richtungen senkrecht zur Stabachse 20 ungehindert ausdehnen können. Die beiden Hohlkörper sind über eine Klebeschicht an Stellen 25 miteinander verbunden. Alternativ kann der innere Hohlkörper auch so auf den äußeren Hohlkörper aufgesteckt sein, daß kein Verkleben nötig ist. Innerhalb des inneren Hohlkörpers 24 kann sich ein Magnet 23 befinden, der in dem dargestellten Ausführungsbeispiel über eine Klebeschicht 27 mit dem inneren Hohlkörper 24 verbunden ist. An diesem Magneten 23 ist ein magnetisches Antastformelement 22 mit Antastpunkt P lösbar befestigt.

Im Rahmen der beschriebenen Erfindung sind auch weitere Abwandlungen und verschiedenste Kombinationen der genannten Merkmale möglich.

## Patentansprüche

1. Prüfkörper mit mindestens zwei Kugelförmigen Antastformetementen (12; 22) und mit mindestens einem stabförmigen Verbindungselement (11; 21) zur Verbindung der mindestens zwei Antastformelemente (12; 22), wobei jedes Verbindungselement (11; 21) mindestens ein Befestigungselement zur Befestigung eines Antastformelements (12; 22) an einem Ende des Verbindungselements (11; 21) aufweist,
**dadurch gekennzeichnet, dass** die Mittelpunkte der durch jedes Verbindungselement verbundenen zwei Antastformelemente auf der Verlängerung der Achse dieses Verbindungselements liegen,
Längenveränderungen der mindestens zwei Antastformelemente (12; 22) und des mindestens einen Verbindungselements (11; 21) durch jedes Befestigungselement derart kompensiert werden, dass der Abstand zwischen jeweils zwei Kugelmittelpunkten der Antastformelemente (P) bei Standardmessbedingungen, also bei Temperaturen zwischen -20° Celsius and +70° Celsius und einer Luftfeuchtigkeit zwischen 0% und 100%, konstant ist.

2. Prüfkörper nach Anspruch 1, in welchem jedes Befestigungselement ein Material mit einem positiven oder negativen thermischen Längenausdehnungskoeffizienten umfasst und die Form und/oder Bemessung jedes Befestigungselements so gewählt ist, dass Längenänderungen jedes Antastformelements und/oder jedes Verbindungselements bei Standardmeßbedingungen kompensiert werden.

3. Prüfkörper nach einem der vorangegangenen Ansprüche, in welchem jedes Befestigungselement ein erstes Teilelement aus einem ersten Material und ein zweites Teilelement aus einem zweiten Material umfasst, wobei das Befestigungselement derart an dem Verbindungselement angeordnet ist und die Form und/oder Bemessung der beiden Teilelemente so gewählt ist, dass Längenänderungen jedes Antastformelements und/oder jedes Verbindungselements bei Standardmeßbedingungen kompensiert werden.

4. Prüfkörper nach Anspruch 3, in welchem das erste Teilelement als Hohlkörper ausgebildet wird.

5. Prüfkörper nach einem der vorangegangenen Ansprüche, in welchem die Antastformelemente und die Befestigungselemente miteinander lösbar verbindbar sind.

6. Prüfkörper nach Anspruch 5, in welchem die lösbare Verbindung durch Magnetkräfte realisiert ist.

7. Prüfkörper nach Anspruch 6, in welchem die Befestigungselemente zur Ausbildung der magnetischen Verbindung Magnete umfassen.

8. Prüfkörper nach einem der vorangegangenen Ansprüche, in welchem mindestens ein Antastformelement mit mindestens zwei Verbindungselementen verbunden ist.

9. Prüfkörper nach Anspruch 8, in welchem die Verbindungselemente die Kanten und die Antastformelemente die Ecken eines Tetraeders bilden.

## Claims

1. Test article with at least two spherical moulded sensing elements (12; 22) and with at least one rod-like connecting element (11; 21) for connecting the at least two moulded sensing elements (12; 22), wherein each connecting element has at least one securing element for securing a moulded sensing element (12; 22) to one end of the connecting element (11; 21),
**characterized in that**
the centre points of the two moulded sensing elements which are connected by each connecting element lie on the extension of the axis of this connecting element, changes in the length of the at least two moulded sensing elements (12; 22) and of the at least one connecting element (11; 21) are compensated for by each securing element such that the distance between in each case two sphere centres of the moulded sensing elements (P) is constant in standard measurement conditions, that is to say at temperatures between -20° Celsius and +70° Celsius and air humidity between 0% and 100%.

2. Test article according to Claim 1, in which each securing element comprises a material with a positive or negative longitudinal thermal coefficient of expansion and the shape and/or size of each securing element is chosen such that changes in the length of each moulded sensing element and/or each connecting element in standard measurement conditions are compensated for.

3. Test article according to one of the preceding claims, in which each securing element comprises a first partial element made of a first material and a second partial element made of a second material, wherein the securing element is arranged on the connecting element such, and the shape and/or size of the two partial elements are/is chosen such, that changes in the length of each moulded sensing element and/or each connecting element in standard measurement conditions are compensated for.

4. Test article according to Claim 3, in which the first partial element is in the form of a hollow article.

5. Test article according to one of the preceding claims, in which the moulded sensing elements and the securing elements can be detachably connected to each other.

6. Test article according to Claim 5, in which the detachable connection is accomplished by magnetic forces.

7. Test article according to Claim 6, in which the securing elements comprise magnets for achieving the magnetic connection.

8. Test article according to one of the preceding claims, in which at least one moulded sensing element is connected to at least two connecting elements.

9. Test article according to Claim 8, in which the connecting elements form the edges and the moulded sensing elements form the corners of a tetrahedron.

## Revendications

1. Eprouvette comprenant au moins deux éléments profilés de palpage (12; 22) de forme sphérique et au moins un élément de liaison (11, 21) en forme de barre, pour la liaison des au moins deux éléments profilés de palpage (12; 22), chaque élément de liaison (11; 21) présentant au moins un élément de fixation, pour assurer la fixation d'un élément profilé de palpage (12; 22) sur une extrémité de l'élément de liaison (11; 21)
**caractérisée en ce que**
les centres des deux éléments profilés de palpage, reliés par chaque élément de liaison, sont situés sur le prolongement de l'axe de cet élément de liaison,
les variations de longueur des au moins deux éléments profilés de palpage (12; 22) et du au moins un élément de liaison (21) sont compensées par chaque élément de fixation, de manière que l'espacement, entre chaque fois deux centres de sphère (P) des éléments profilés de palpage, soit constant dans des conditions de mesure standard, donc à des températures comprises dans la fourchette entre - 20° Celsius et +70° Celsius et une humidité de l'air comprise entre 0% et 100 %.

2. Eprouvette selon la revendication 1, dans laquelle chaque élément de fixation comprend un matériau ayant un coefficient de dilatation thermique positif ou négatif, et la forme et/ou les dimensions de chaque élément de fixation est/sont choisie(s) telles que les modifications de longueur de chaque élément profilé de palpage et/ou de chaque élément de liaison sont compensées lorsque l'on se trouve dans des conditions de mesure standards.

3. Eprouvette selon l'une des revendications précédentes, dans laquelle chaque élément de fixation comprend un premier élément partiel formé d'un premier matériau et un deuxième élément partiel formé d'un deuxième matériau, l'élément de fixation étant disposé de telle manière sur l'élément de liaison, et la forme et/ou les dimensions des deux éléments étant choisie(s) telles que des variations de longueur de chaque élément profilé de palpage et/ou de chaque élément de liaison sont compensées lorsqu'on est dans des conditions de mesure standards.

4. Eprouvette selon la revendication 3, dans laquelle le premier élément partiel est réalisé sous la forme de corps creux.

5. Eprouvette selon l'une des revendications précédentes, dans laquelle les éléments profilés de palpage et les éléments de fixation peuvent être reliés ensemble de façon désolidarisable.

6. Eprouvette selon la revendication 5, dans laquelle la liaison désolidarisable est réalisée à l'aide de forces magnétiques.

7. Eprouvette selon la revendication 6, dans laquelle les éléments de fixation comprennent des aimants pour réaliser la liaison magnétique.

8. Eprouvette selon l'une des revendications précédentes, dans laquelle au moins un élément profilé de palpage est relié à au moins deux éléments de liaison.

9. Eprouvette selon la revendication 8, dans laquelle les éléments de liaison forment les arêtes et les éléments profilés de palpage forment les sommets d'un tétraèdre.
